# EUROPEAN PATENT SPECIFICATION

(11) **EP 0 698 553 B1**
(45) Date of publication and mention of the grant of the patent: **04.11.1998**
(21) Application number: 94500149.3
(22) Date of filing: 26.08.1994
(51) Int. Cl.: B65B 25/04, B65G 57/06

(54) **Automatic fruit container filling machine**
Automatische Obstbehälter-Füllmaschine
Machine de remplissage automatique pour récipients à fruits

(43) Date of publication of application: 28.02.1996
(73) Proprietor: FOOD MACHINERY ESPANOLA S.A., E-46012 Valencia (ES)
(72) Inventor: Sanchez de Leon Rodriguez Roda, Juan Antonio, E-46012 Valencia (ES)
(74) Representative: Blumbach, Kramer & Partner GbR

(56) References cited:
- NL-A- 8 205 077
- NL-A- 9 201 646

## Description

The present invention relates to an automatic fruit container filler machine as defined by the features of the preamble of claim 1.

Fruit container filler machines are already known of the kind designed to perform their filler function endeavouring, insofar as possible, to avoid the free fall of the fruit in order for the same not to be damaged on dropping, being necessarily applicable to certain kinds of delicate and extremely sensitive fruit such as citrus fruits, tomatoes, peaches or other like products.

Therefore, prior art machines and devices are devised to lay the fruit directly upon the container bottom in order to uniformly cover the surface of such bottom, do likewise on the next layer, and so on and so forth until the height of the full container is attained.

Current facilities comprise a container filling station arranged on a platform travelling on an upright shaft. The lower end of a belt conveying the product enters the container bottom, eccentrically, to fill the same with the product whilst moving up, driven by a detector based upon the increase of the layers of such product.

These current systems perform their tasks turning the container whereas the unit unloading the fruit is in contact with such fruit, placing the same upon the said container, but are unable to prevent the fruit from being knocked and to ensure a correct filling, since they are dependent on the flow of fruit.

NL-A 9201646 discloses an automatic fruit container filler machine in accordance with the preamble of claim 1. There, a vertically movable carriage is provided which comprises a bottom being formed by two pivotable plates. In the upper position of the carriage, the bottom is closed and fruits are transported onto the bottom by means of a horizontal supply belt. Thereafter, the carriage is moved down into a container and the bottom is opened in its middle so that fruits can drop into the container.

It is an object of the present invention to provide an automatic fruit container filler machine which significantly reduces the danger of damaging the fruits during the filling operation.

This object is solved by the features mentioned in claim 1.

A specific implementation is claimed in subclaim 2.

The claimed fruit container filler machine therefore overcomes the disadvantages and problems found in the prior art, the most outstanding advantage thereof being that the fruit is no longer knocked and the container is filled correctly and uniformly, with successive layers or levels.

Broadly speaking, the object of the invention relates to a machine comprising an upwardly elongate structure supporting an electric motor at its top which lifts and lowers a carriage holding an endless belt having a turning and conveying movement in order to establish a horizontal belt surface that can be positioned at an upper level, coplanar with an attached outer endless belt feeding a layer of fruit, and can be positioned at a lower level, namely at the bottom of the container or preceding layer of fruit, at which lower position the belt is retracted, by virtue of its conveying movement, in order to deposit the layer or level of fruit without knocking the same and without altering the formation of such layer or level of fruit, as provided by the feeder.

The machine according to the present invention affords the aforesaid advantages, and others that will be easily inferred from the embodiment of an automatic fruit container filler machine described hereinafter in further detail to expedite the understanding of the features set out above, contemporaneously giving a number of details. The drawings illustrate a practical embodiment of the invention, as an example only, without limiting the scope of such invention.

In the drawings:

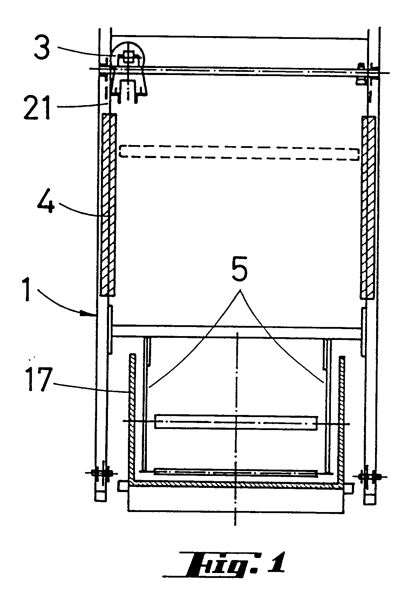

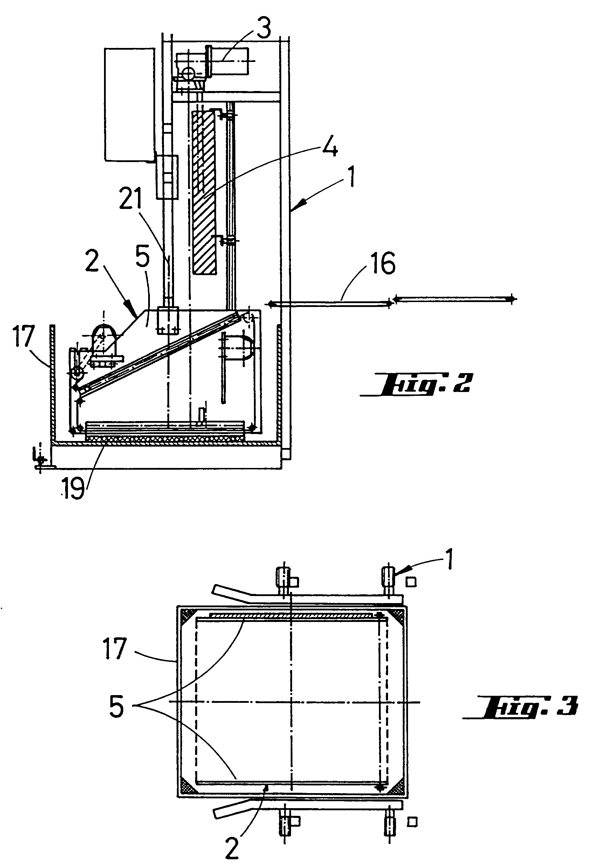

Figures 1, 2 and 3 show the automatic fruit container filler machine respectively as front elevation, side and plan views.
Figure 4 shows a close-view of the carriage lift of the machine, in its raised position outside the container, coplanar with the feeding belt attached to the machine.
Figure 5 illustrates the position of the carriage in a lowered position inside the container, when the container is being filled, with the initial layer of fruit being placed.

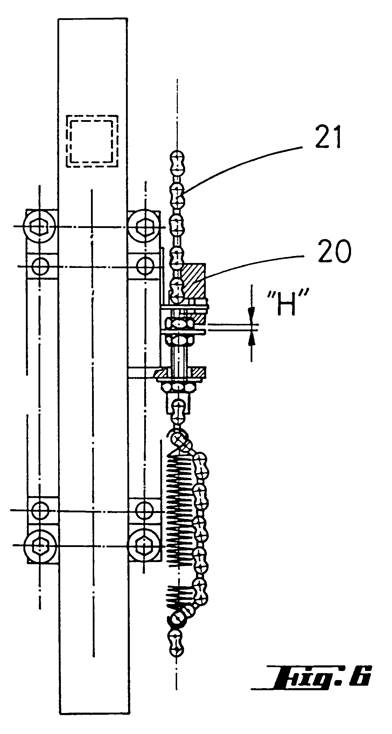

Figure 6 is a close-view of a device with which the machine is fitted, designed to stop the carriage whilst being lowered, in such a way as to prevent the layer of fruit to be deposited upon the bottom of the container or preceding layer from being knocked, in order not to damage the fruit.

In accordance with the drawings, the fruit container filler machine subject of the invention and in accordance with a preferred embodiment thereof, comprises a general structure or framework, numbered -1-, which has an upwardly elongate shape, designed to support and have fixed the various components of the machine, which are basically a carriage -2- having ascensional movement through drive means -3-, a chain -21- and a balance weight -4-, which means allow the carriage to be located within a container -17- lying at the foot of the said structure -1- and in a position above and outside the said container.

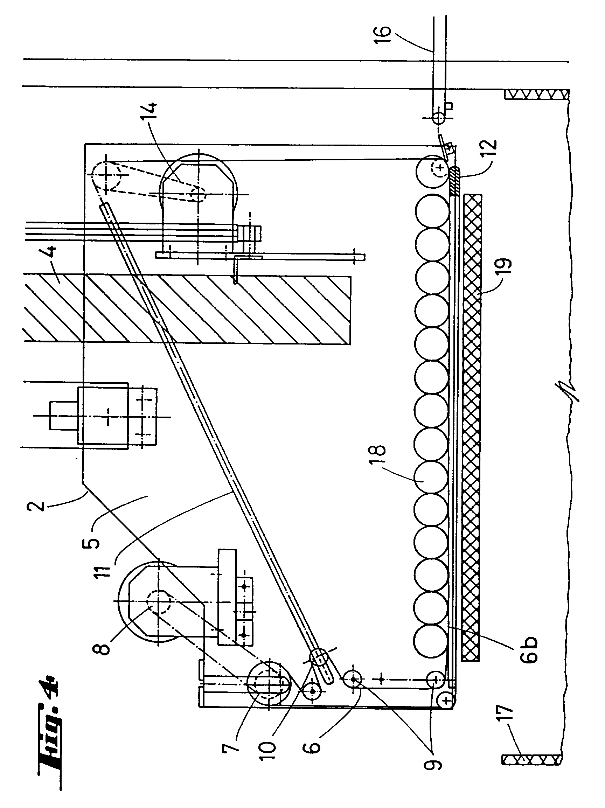

The said carriage -2- comprises two vertical and parallel plates or flanks -5- joined by transverse rollers -7-, -8-, -9- and -10- guiding an endless belt - 6-. The roller -7- is the drive roller and is connected to a motor -8- through the relevant transmission. Other rollers -9- solely guide and stretch the endless belt -6-whereas the roller -10- can also move along the slot guide -11-. A strip -12- across the carriage -2- can also move along the slot guide -13-. The said roller -10- and strip -12- are driven for movement by a motor -14- and a chain -15- fixed at its ends to the said roller and strip, and hence when the motor -14- turns in a given direction, it drives the roller -10- towards the highest part of the guide -11- and simultaneously draws the strip -12- back along its respective guide, in the opposite direction, and vice versa. In accordance with the above, as the case may be, an oblique endless belt section is obtained, numbered -6a-, or a horizontal endless belt section is obtained, numbered -6b-, this section -6b- receiving a layer of fruit -18c- from the feeder endless belt -16- when the carriage -2- is fixed and in the raised positioned, in which the said section -6b- and belt -16- are coplanar, as shown in figure 4.

In the lower carriage -2- position the horizontal belt section -6b- lies close to the bottom of the container -17-, ready to transfer the fruit layer -18- to such bottom, according to -18a-. This operation to transfer the fruit from position -18- to position -18a- is carried out without knocking or rubbing the same, retaining the initial formation of the layer, because of the synchrony there is between the motor -8- causing the belt -6- to turn and the motor -14- causing the belt to move away from the horizontal section -6b- which together causes the fruit to be moved but slightly.

The underside of the carriage -2- has a piece of foam -19- which acts as a deflector to avoid the fruit from coming into contact with the bottom of the container -17-, or preceding layer of fruit, a detector -20- acting when a distance "H" is reduced by the chain -21- movement, causing the motor -3- to stop and the said distance "H" to be recovered.

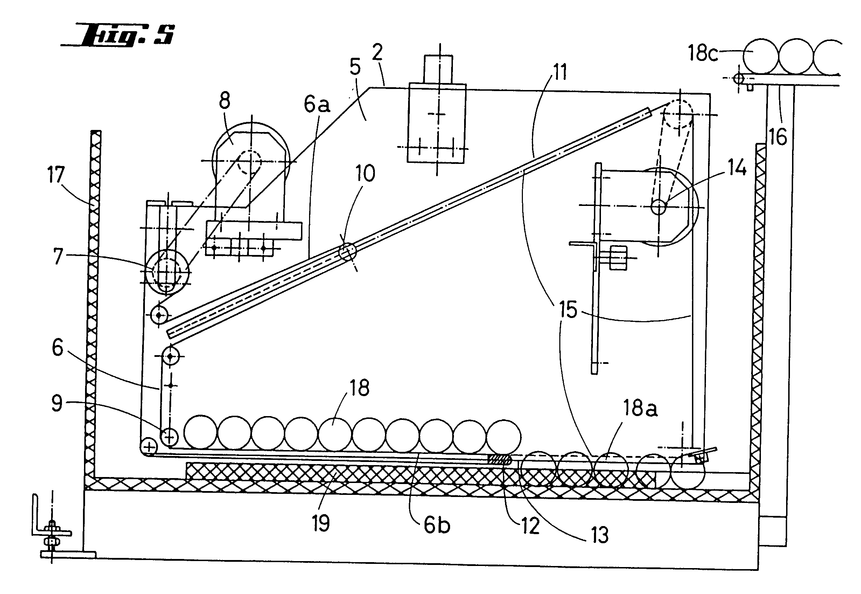

In accordance with the above, the machine works as follows:
When the belt -16- is full of a fruit layer -18c- feeding stops and a detector starts the said belt -16-, that lies coplanar with the belt section -6b-, to which the fruit is transferred, according to -18-, with the assistance of the movement of the latter, caused by a motor -8-. den the said belt section is full of fruit -18- a detector starts the motor -3- and causes the carriage -2- to be lowered down to the required height, in accordance with a detector which reveals the presence of the bottom of the container -17- or preceding layers of fruit, the motor -14- being started in order that it may, through the chain -15-, drive the roller -10- up and draw the strip -12- back at the same time, thereby reducing the surface of the section -6b- to deposit the fruit on the bottom of the container -17- or preceding fruit layer, as appropriate, as at number -18a- illustrated in figure 5. The motor -3- is again started to drive the carriage -2- up and the turning of the motor -14- is at the same time inverted now to drive the strip -12- and hence the horizontal belt section -6b- is again obtained for a new working cycle.

## Claims

1. An automatic fruit container filler machine, comprising an upwardly elongate structure (1) supporting an electric motor (3) at the top which is designed for the upward and downward movement of a carriage (2), the carriage (2) comprising two parallel flanks (5) and being sized to be housed within a standard container (17), that is designed to lie at the foot of said structure (1), the filler machine further comprising a first belt (16) which forms an integral part of a fruit feeder, in order to transfer fruits provided on said first belt (16) to said carriage (2),
characterized in that
said carriage (2) is fitted with a second, endless belt (6) having a width equal to that of the carriage and a length in excess of the carriage length, the second belt forming a specific circuit, comprised within said carriage, and being connected to a first drive means (8) driving the second belt to turn about transverse guide rollers (9) that are fixed at their ends to the flanks (5) of the carriage (2), the second belt (6) being guided around a movable roller (10) and a movable strip (12) being equal in length to the width of the belt (6), the roller and strip taking up a horizontal position across the second belt and being connected to common drive means (14) which, depending upon the direction of movement, drives the roller (10) or the strip (12) in such a manner that opposed movements of the roller (10) and strip (12) are provided, the roller being movable along an oblique and rising guide (11) lying on the higher part of the carriage flanks (5), whereas the strip is movable along a horizontal guide (13) lying on the lower part of said carriage flanks (5), the second belt comprising a horizontal belt section (6b) which in the raised carriage position is positioned at the height of said first belt (16), in order to transfer a fruit layer (18c) provided on the first belt (16) to the horizontal belt section (6b), whereas in the lower carriage position, the movement of the common drive means (14) is inverted, now driving the roller (10) allowing the horizontal belt section (6b) to be retracted to deposit the fruit layer (18) upon the bottom of the container (17), forming an initial filling layer (18a) using a detector, and at subsequent stages forming further filling layers upon preceding layers, until the container (17) is filled.

2. An automatic fruit container filler machine as claimed in claim 1, characterized in that the first drive means (8) rotarily driving the second belt (6) is synchronized with the common drive means (14) driving the movable roller (10) in order to allow the transfer of the fruit (18) to the position of the initial filling layer (18a), and to successive positions, moving the same but slightly, to avoid knocking and rubbing, and keeping unchanged the formation of the layer.

## Patentansprüche

1. Automatische Fruchtbehälter-Füllmaschine mit einem nach oben langgestreckten Aufbau (1), der an der Oberseite einen Elektromotor (3) trägt, der dazu ausgelegt ist, einen Schlitten (2) nach oben und unten zu bewegen, wobei der Schlitten (2) zwei parallele Schenkel (5) aufweist und größenmäßig derart ausgelegt ist, daß er in einem Standardbehälter (17), der dazu ausgelegt ist, am Fuß des Aufbaus (1) zu liegen, untergebracht werden kann, wobei die Füllmaschine weiterhin ein erstes Band (16) aufweist, das einen integralen Teil eines Fruchtförderers bildet, so daß auf dem ersten Band (16) vorhandene Früchte zu dem Schlitten (2) transportiert werden können,
dadurch gekennzeichnet,
daß der Schlitten (2) mit einem zweiten, endlosen Band (6) versehen ist, dessen Breite gleich groß ist wie diejenige des Schlittens und dessen Länge größer ist als die Länge des Schlittens, daß das zweite Band einen spezifischen Umlauf bildet, in dem Schlitten aufgenommen ist und mit einer ersten Antriebseinrichtung (8) verbunden ist, die das zweite Band derart antreibt, daß sich dieses um Querführungsrollen (9) herum bewegt, die an ihren Enden mit den Schenkeln (5) des Schlittens (2) befestigt sind, daß das zweite Band (6) um eine bewegliche Rolle (10) und einen beweglichen Streifen (12) herum geführt ist, dessen Länge gleich groß ist wie die Breite des Bands (6), daß die Rolle und der Streifen eine horizontale Position quer zu dem zweiten Band einnehmen und mit einer gemeinsamen Antriebseinrichtung (14) verbunden sind, die abhängig von der Richtung der Bewegung entweder die Rolle (10) oder den Streifen (12) in einer solchen Weise antreibt daß entgegengesetzte Bewegungen der Rolle (10) und des Streifens (12) erzielt werden, daß die Rolle entlang einer schräg verlaufenden und ansteigenden Führung (11), die sich an dem höher liegenden Abschnitt der Schenkel (5) des Schlittens befindet, bewegbar ist, wohingegen der Streifen entlang einer horizontalen Führung (13), die sich an dem unteren Abschnitt der Schenkel (5) des Schlittens befindet, beweglich ist, daß das zweite Band einen horizontalen Bandabschnitt (6b) aufweist, der sich in der angehobenen Schlittenposition auf der Höhe des ersten Bands (16) befindet, so daß eine Fruchtlage (18c), die auf dem ersten Band (16) vorhanden ist, auf den horizontalen Bandabschnitt (6b) übertragen werden kann, wohingegen die Bewegung der gemeinsamen Antriebseinrichtung (14) in der unteren Schlittenposition umgekehrt wird, so daß nun die Rolle (10) angetrieben wird, wodurch es möglich ist, den horizontalen Bandabschnitt (6b) zurückzuziehen, um die Fruchtlage (18) auf dem Boden des Behälters (17) unter Verwendung eines Detektors aufzubringen, wodurch eine anfängliche Füllage (18a) gebildet wird, und daß bei nachfolgenden Schritten weitere Füllagen auf den vorhergehenden Lagen gebildet werden, bis der Behälter (17) gefüllt ist.

2. Automatische Fruchtbehälter-Füllmaschine nach Anspruch 1, dadurch gekennzeichnet, daß die erste Antriebseinrichtung (8), die das zweite Band (6) drehend antreibt, mit der gemeinsamen, die bewegliche Rolle (10) antreibenden Antriebseinrichtung (14) synchronisiert ist, so daß der Transport der Frucht (18) zu der Position der anfänglichen Füllage (18a), und zu nachfolgenden Positionen unter nur geringfügiger Bewegung derselben möglich ist, um hierdurch Stöße und Reibvorgänge zu vermeiden und die Formation der Schicht unverändert beizubehalten.

## Revendications

1. Machine de remplissage automatique pour récipients à fruits, comprenant une structure allongée vers le haut (1) qui supporte un moteur électrique (3) au sommet, lequel est conçu pour le mouvement montant/descendant d'un chariot (2), le chariot (2) comprenant deux flancs parallèles (5) et étant d'une taille propre à être abrité à l'intérieur d'un récipient standard (17), lequel est conçu pour être posé au pied de ladite structure (1), la machine de remplissage comprenant en outre une première courroie (16) qui fait partie intégrante d'un dispositif d'alimentation de fruits, afin de transférer des fruits amenés sur ladite courroie (16) audit chariot (2),
caractérisée en ce que
ledit chariot (2) est équipé d'une seconde courroie sans fin (6) ayant une largeur égale à celle du chariot et une longueur qui dépasse la longueur du chariot, la seconde courroie formant un circuit spécifique, compris à l'intérieur dudit chariot, et étant connectée à un premier moyen d'entraînement (8) qui entraîne la seconde courroie afin de tourner autour de rouleaux de guidage transversaux (9) qui sont fixés à leurs extrémités aux flancs (5) du chariot (2), la seconde courroie (6) étant guidée autour d'un rouleau mobile (10) et une bande mobile (12) dont la longueur est égale à la largeur de la courroie (6), le rouleau et la bande occupant une position horizontale à travers la seconde courroie et étant connectés à des moyens d'entraînement communs (14) qui, en dépendance de la direction du mouvement, entraînent le rouleau (10) ou la bande (12) d'une telle manière qu'on assure des mouvements opposés du rouleau (10) et de la bande (12), le rouleau étant mobile le long d'un guide oblique montant (11) situé sur la partie supérieure des flancs (5) du chariot, tandis que la bande est mobile le long d'un guide horizontal (13) situé sur la partie inférieure desdits flancs (5) du chariot, la seconde courroie comprenant un tronçon de courroie horizontal (6b) qui, dans la position relevée du chariot, est positionné à la hauteur de ladite première courroie (16), afin de transférer une couche de fruits (13c) présente sur la première courroie (16) vers le tronçon de courroie horizontal (6d), alors que dans la position basse du chariot, le mouvement des moyens d'entraînement communs (14) est inversé, entraînant maintenant le rouleau (10) en permettant au tronçon de courroie horizontale (6b) d'être rétracté afin de déposer la couche de fruits (18) sur le fond du récipient (17), en formant une couche de remplissage initiale (18a) en utilisant un détecteur, et par étapes successives, former d'autres couches de remplissage sur des couches précédentes, jusqu'à ce que le récipient (17) soit plein.

2. Machine de remplissage automatique pour récipients à fruits selon la revendication 1, caractérisé en ce que les premiers moyens d'entraînement (8) qui entraînent en rotation la seconde courroie (6) sont synchronisés avec les moyens d'entraînement communs (14) qui entraînent le rouleau mobile (10) afin de permettre le transfert des fruits (18) à la position de la couche de remplissage initiale (18a), et à des positions successives, en déplaçant ceux-ci uniquement légèrement, afin d'éviter des heurts et des frottements, et en maintenant sans changement la formation de la couche.
